(19) Europäisches Patentamt
European Patent Office
Office européen des brevets

(11) **EP 2 148 979 B1**

(12) **FASCICULE DE BREVET EUROPEEN**

(45) Date de publication et mention
de la délivrance du brevet:
**01.08.2012 Bulletin 2012/31**

(51) Int Cl.:
*F02D 41/38* (2006.01)     *F02D 41/40* (2006.01)

(21) Numéro de dépôt: **08787894.8**

(86) Numéro de dépôt international:
**PCT/FR2008/000455**

(22) Date de dépôt: **03.04.2008**

(87) Numéro de publication internationale:
**WO 2008/142261 (27.11.2008 Gazette 2008/48)**

(54) **PROCEDE DE CONTROLE DE COMBUSTION D'UN MOTEUR DIESEL**

VERFAHREN ZUR STEUERUNG DER VERBRENNUNG EINES DIESELMOTORS

METHOD OF CONTROLLING THE COMBUSTION OF A DIESEL ENGINE

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.04.2007 FR 0702940**

(43) Date de publication de la demande:
**03.02.2010 Bulletin 2010/05**

(73) Titulaire: **IFP Energies nouvelles**
**92852 Rueil-Malmaison Cedex (FR)**

(72) Inventeurs:
• **HILLION, Mathieu**
 **F-75017 Paris (FR)**
• **CHAUVIN, Jonathan**
 **F-92200 Neuilly-sur-Seine (FR)**

(56) Documents cités:
**EP-A- 0 826 869**     **US-A- 5 755 209**
**US-A1- 2002 194 837**     **US-A1- 2005 188 945**
**US-B1- 7 178 507**

## Description

La présente invention concerne le domaine du contrôle moteur et plus particulièrement le contrôle de combustion d'un moteur diesel.

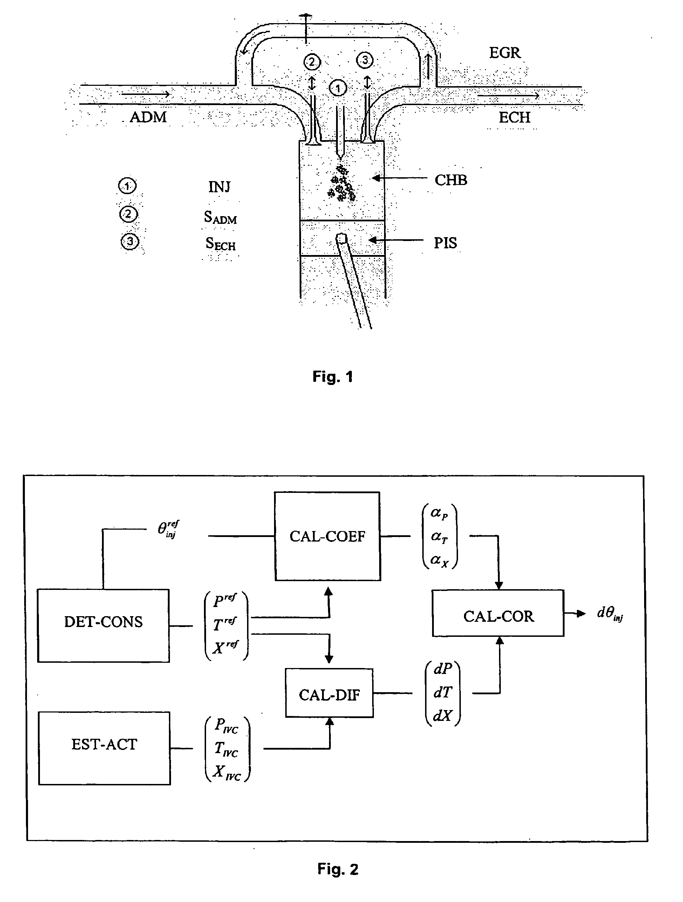

Le fonctionnement du moteur diesel est basé sur l'auto inflammation d'un mélange d'air, de gaz brûlés et de carburant. Le cycle du moteur se décompose en plusieurs phases (figure 1) :

- Lors de l'admission (*ADM*), la soupape d'admission ($S_{ADM}$) laisse entrer dans la chambre (*CHB*) le mélange d'air et de gaz brûlés. L'air est prélevé dans l'environnement extérieur du moteur. Les gaz brûlés sont prélevés dans la tubulure d'échappement (*ECH*) et ramené vers la tubulure d'admission (re-circulation de gaz brûlés EGR). Ce mélange gazeux rempli la chambre de combustion (*CHB*) et se mélange avec les gaz brûlés restés dans la chambre depuis la précédente combustion (EGR interne).

- La soupape d'admission se ferme (IVC : *intake valve closing*). Le piston (*PIS*) comprime les gaz.

- L'injecteur de carburant (*INJ*) injecte une masse précise de carburant. Après un bref délai d'auto inflammation, le mélange air, gaz brûlés, carburant s'enflamme créant ainsi une surpression qui repousse le piston.

- Une fois le piston redescendu, la soupape d'échappement ($S_{ECH}$) s'ouvre, le mélange gazeux est alors évacué par la tubulure d'échappement. Après la fermeture de la soupape d'échappement, il reste une partie des gaz dans le cylindre (EGR interne). Les gaz évacués par la tubulure d'échappement sont divisés en deux. Une partie re-circule vers l'admission (EGR) tandis que le reste est évacué hors du moteur (via l'échappement).

Le but du contrôle moteur est de garantir au conducteur le couple qu'il demande tout en minimisant le bruit et les émissions de polluants. Il faut donc régler aussi finement que possible le pilotage des quantités des différents gaz et du carburant.

## État de la technique

Pour réaliser un contrôle de début de combustion d'un moteur diesel, on connaît des méthodes permettant de déterminer le milieu de combustion à l'aide de capteurs montés sur le moteur. Le plus précis étant d'utiliser un capteur de pression. Une telle méthode est décrite par exemple dans le document suivant :

J. Bengtsson, P. Strandh, R. Johansson, P. Tunestal and B. Johansson, "Control of Homogeneous Charge Compression Ignition (HCCI) Engine Dynamics", Proceeding of the 2004 American Control Conference, Boston, June 30 - July 2, 2004

Cependant l'utilisation de tels capteurs sur des véhicules de série n'est pas envisageable du fait du coût très important de tels capteurs. De plus, ces capteurs sont généralement sujet à des dérives relativement rapides.

On connaît également des méthodes dans lesquelles les quantités et les phasages sont optimisés sur chaque point de fonctionnement statique (régime et couple) de manière à dégager une stratégie idéale à chaque point. On utilise donc un calibrage sur banc moteur pour dégager les valeurs optimales des deux jeux de données principaux :

- les masses d'air $M_{air}$ et de gaz brûlés $M_{gb}$ nécessaire dans la chambre de combustion, qu'on représentera par $X_{air} = (M_{air}, M_{gb})$.

- La masse de carburant $M_f$ ainsi que l'angle vilebrequin $\theta_f$ auquel le carburant est injecté, qu'on représentera par $X_{fuel} = (M_f, \theta_f)$.

Cependant ces stratégies se révèlent insuffisantes dans les phases transitoires. En effet, lors des phases de transition d'un point de fonctionnement à un autre (changement de vitesse du véhicule ou du profil de la route), le contrôle moteur supervise les différents actionneurs présents dans le moteur pour garantir le couple désiré tout en minimisant le bruit, les émissions de polluants et la consommation. Cela se traduit donc par le passage des valeurs des paramètres du point initial aux valeurs des paramètres du point final:

$$\begin{cases} X_{air}^{initial} \rightarrow X_{air}^{final} & (a) \\ X_{fuel}^{initial} \rightarrow X_{fuel}^{final} & (b) \end{cases}$$

Or, il existe dans le moteur deux échelles de temps. La plus rapide (50 Hz) correspond à l'ensemble du phénomène de combustion (1 cycle moteur). A cette échelle, on est capable de changer la stratégie de l'injection ($X_{fuel}$) pour piloter la combustion. C'est la boucle de fuel. (Cf. (*b*)). La plus lente (1 Hz) correspond à la dynamique des gaz dans les tubulures du moteur (admission, échappement, re-circulation de gaz brûlés). On ne peut changer plus vite la stratégie de cette boucle d'air ($X_{air}$). (Cf. (*a*))

Avec les méthodes actuelles, les variables pilotées ($X_{air}, X_{fuel}$) n'arrivent donc pas en même temps à leurs valeurs de consigne à cause de cette différence de dynamique. Une partie des paramètres atteignant presque instantanément sa valeur de consigne finale alors que l'autre partie est encore aux valeurs de consigne initiale, le moteur produit alors plus de polluants ou de bruit, et peut même dans certain cas s'éteindre.

L'objet de l'invention concerne donc un procédé pour assurer le contrôle de début de combustion d'un moteur diesel en phase transitoire.

Le procédé y parvient en contrôlant ces deux boucles dynamiques de manière séparée : piloter la boucle la plus lente (boucle d'air) de manière indépendante, et adapter la dynamique de la boucle rapide (boucle de fuel) de manière à être cohérent avec la boucle la plus lente.

Un autre objet de l'invention concerne un moteur diesel apte à appliquer le procédé selon l'invention.

**Le procédé selon l'invention**

L'invention concerne un procédé de contrôle de combustion d'un moteur diesel, dans lequel :

- on détermine des valeurs de consigne de paramètres physiques liés à l'admission de

  comburant gazeux dans une chambre de combustion, ainsi qu'une valeur de consigne $\theta_{inj}^{ref}$ d'un angle vilebrequin auquel un carburant doit être injecté dans la chambre de combustion, lesdites valeurs de consigne étant déterminées de façon à optimiser la combustion,
- un système de contrôle moteur pilote des actionneurs de façon à ce que les valeurs desdits paramètres physiques soient égales auxdites valeurs de consigne.

Le procédé comporte également les étapes suivantes :

- on corrige la valeur de consigne $\theta_{inj}^{ref}$ avant que lesdits paramètres physiques n'atteignent leurs valeurs de consigne, en tenant compte des différences entre des valeurs réelles desdits paramètres physiques et lesdites valeurs de consignes de ces paramètres physiques, et
- ledit système de contrôle moteur pilote une injection de carburant dans la chambre de combustion lorsque l'angle vilebrequin est égal à ladite valeur corrigée de consigne $\theta_{inj}^{ref}$ afin de conserver la combustion optimale.

Selon l'invention, on peut déterminer la correction $d\theta_{inj}$ en appliquant les étapes suivantes :

- on estime lesdites valeurs réelles desdits paramètres physiques ;

- on calcule lesdites différences $dP$, $dT$ et $dX$ entre lesdites valeurs réelles et lesdites valeurs de consignes ;

- on calcule des coefficients de linéarisation $\alpha_P$, $\alpha_T$ et $\alpha_X$ définis par une linéarisation de l'intégrale de Knock au premier ordre ;

- on calcule la correction $d\theta_{inj}$ en appliquant la formule suivante :

$$d\theta_{inj} = \alpha_P.dP + \alpha_T.dT + \alpha_X.dX$$

Les paramètres physiques peuvent être choisis parmi au moins les paramètres suivants au moment de la fermeture soupape : pression dans la chambre de combustion ($P_{IVC}$), température dans la chambre de combustion ($T_{IVC}$), et rapport ($X_{IVC}$) entre une masse de gaz brûlés et une masse de gaz totale dans la chambre de combustion.

Les valeurs de consignes peuvent être classiquement déterminées à l'aide d'une cartographie de consigne établie sur banc moteur.

Enfin, l'invention concerne également un moteur diesel comprenant au moins une chambre de combustion, un système d'injection de carburant dans ladite chambre de combustion, au moins une conduite d'admission pour l'admission dans la chambre de combustion d'un comburant gazeux, un système de contrôle moteur apte à piloter des actionneurs, des moyens pour déterminer des valeurs de consigne ($P_{ef}$, $T^{ref}$, $X^{ref}$) à appliquer à des paramètres physiques liés à l'admission du comburant gazeux dans la chambre de combustion et une valeur de consigne $\theta_{inj}^{ref}$ d'un angle vilebrequin auquel un carburant doit être injecté dans la chambre de combustion.

Ce moteur comporte également des moyens pour corriger la valeur de consigne $\theta_{inj}^{ref}$ avant que lesdits paramètres physiques n'atteignent leurs valeurs de consigne, en tenant compte d'une différence entre des valeurs réelles desdits paramètres physiques et lesdites valeurs de consignes de ces paramètres physiques ($P^{ref}$, $T^{ref}$, $X^{ref}$), et en ce que ledit système de contrôle moteur est apte à piloter ledit système d'injection de façon à injecter du carburant dans la chambre de combustion lorsque l'angle vilebrequin est égal à ladite valeur corrigée de consigne $\theta_{inj}^{ref}$ afin de conserver la combustion optimale.

D'autres caractéristiques et avantages du procédé et du moteur selon l'invention, apparaîtront à la lecture de la description ci-après d'exemples non limitatifs de réalisations, en se référant aux figures annexées et décrites ci-après.

## Présentation succincte des figures

- la figure 1 montre les différentes phases d'un cycle de combustion d'un moteur diesel.

- la figure 2 illustre un schéma de calcul de la correction $d\theta_{inj}$ de l'angle d'injection du carburant.

## Description détaillée du procédé

Le procédé selon l'invention permet de contrôler la combustion d'un moteur diesel, en phase statique comme en phase transitoire. Il comporte un contrôle séparé et indépendant de la boucle d'air (boucle lente) et de la boucle de fuel (boucle rapide), puis une adaptation de la dynamique de la boucle de fuel de manière à être cohérent avec la boucle d'air. Le procédé permet ainsi une adaptation de $X_{fuel}$ pour conserver les caractéristiques de la combustion demandée (à travers la demande de couple du conducteur). On limite ainsi l'impact sur les émissions de polluants et de bruit tout en garantissant au conducteur le couple demandé.

Selon ce procédé, le contrôle de la combustion d'un moteur diesel s'effectue en quatre étapes :

1- Détermination de valeurs de consigne pour différents paramètres physiques.

Lors des phases de transition d'un point de fonctionnement à un autre (changement de vitesse du véhicule ou du profil de la route), le contrôle moteur supervise les différents actionneurs présents dans le moteur pour garantir le couple désiré tout en minimisant le bruit, les émissions de polluants et la consommation. Cela se traduit donc par le passage des valeurs des paramètres $X_{air}$ et $X_{fuel}$ d'un point initial aux valeurs des paramètres d'un point final:

$$\begin{cases} X_{air}^{initial} \rightarrow X_{air}^{final} & (a) \\ X_{fuel}^{initial} \rightarrow X_{fuel}^{final} & (b) \end{cases}$$

Les valeurs finales sont définies de façon à optimiser la combustion, c'est-à-dire à brûler le maximum de carburant de façon à minimiser les émissions de polluants et la consommation tout en minimisant le bruit. Ces valeurs finales optimisant la combustion sont appelées valeurs de consigne. Le contrôle moteur est chargé de faire respecter ses valeurs consignes.

Les paramètres physiques importants à réguler pour la boucle d'air, et qui permettent de définir une valeur de consigne pour $X_{air}$ sont les suivants :

$P_{IVC}$ : la pression dans la chambre de combustion au moment de la fermeture soupape. Elle est fonction de l'angle vilebrequin θ.

$T_{IVC}$ : la température dans la chambre de combustion au moment de la fermeture soupape. Elle est fonction de l'angle vilebrequin θ.

$X_{IVC}$ : le rapport entre la masse de gaz brûlés et la masse de gaz totale dans la chambre de combustion au moment de la fermeture soupape (paramètre entre 0 et 1). Il est fonction de l'angle vilebrequin θ.

Les valeurs de ces trois paramètres sont déterminées en continue. Pour ce faire, nous supposons que la composition ($X$) et la pression ($P$) sont les mêmes dans le cylindre et dans le collecteur d'admission où nous avons une mesure. Nous estimons $T_{IVC}$ par la loi des gaz parfait $T_{IVC} = \dfrac{P_{IVC} V_{IVC}}{R M_{IVC}}$ où R est la constante des gaz parfait (R=287) et $M_{IVC}$ est la masse aspirée par le cylindre qui est mesurée par un débitmètre. Pour ces trois paramètres physiques liés à l'admission de comburant gazeux dans la chambre de combustion du moteur, les valeurs de consigne sont respectivement notées : $P^{ref}$, $T^{ref}$ et $X^{ref}$.

Ces valeurs de consignes sont obtenues à partir d'une cartographie de consigne établie sur banc moteur : les valeurs de consigne de ces paramètres sont données par le point optimal cartographié au banc moteur (valeur que ces paramètres doivent atteindre). Ces valeurs de consigne sont déterminées de façon à optimiser la combustion.

Selon l'invention, le paramètre de la stratégie de fuel important pour adapter la boucle de fuel est l'angle

vilebrequin, noté θ$_{inj}$, pour lequel du carburant est injecté. On note $\theta_{inj}^{ref}$ sa valeur de consigne. Cette valeur est également donnée par le point optimal cartographié au banc moteur. Elle correspond aux valeurs de consigne $P^{ref}$, $T^{ref}$ et $X^{ref}$.

2- Contrôle de la boucle d'air (boucle lente).

Une fois déterminées les valeurs de consigne $P^{ref}$, $T^{ref}$ et $X^{ref}$, un système de contrôle moteur pilote des actionneurs de façon à ce que les valeurs des paramètres physiques $P_{IVC}$, $T_{IVC}$ et $X_{IVC}$ soient égales à ces valeurs de consigne ($P^{ref}$, $T^{ref}$, $X^{ref}$).

Idéalement, les trois paramètres $P_{IVC}$, $T_{IVC}$ et $X_{IVC}$ atteignent instantanément leurs valeurs de consigne $P^{ref}$, $T^{ref}$ et $X^{ref}$. En réalité, la lenteur de la boucle d'air fait qu'il existe une erreur sur ces paramètres entre la consigne et leur valeur réelle pendant toute la phase de transition. On adapte donc la boucle de fuel aux erreurs des ces paramètres.

Pour ce faire on adapte la valeur de consigne $\theta_{inj}^{ref}$ de l'angle d'injection.

3- Correction de la valeur de consigne de l'angle d'injection $\theta_{inj}^{ref}$ .

Pour adapter la valeur de consigne $\theta_{inj}^{ref}$ de l'angle d'injection, avant que lesdits paramètres physiques n'atteignent leurs valeurs de consigne, on prend en compte, au moment de la fermeture des soupapes, les différences entre les valeurs réelles ($P_{IVC}$, $T_{IVC}$ et $X_{IVC}$) de ces paramètres et les valeurs de consigne ($P^{ref}$, $T^{ref}$, $X^{ref}$) de ces paramètres. On utilise les notations suivantes : $dP = P_{IVC} - P_{ref}$, $dT = TI_{IVC} - T_{ref}$ et $dX = X_{IVC} - X_{ref}$.

On cherche donc un nouvel angle d'injection $\theta_{inj}^{cor} = \theta_{inj}^{ref} + d\theta_{inj}$ pour que l'angle de début de combustion θ$_{soc}$ soit le même. Cet angle est défini par $P^{ref}$, $T^{ref}$ et $X^{ref}$. On cherche donc dθ$_{inj}$ tel que :

- si il n'y a pas d'erreur, c'est-à-dire si tous les paramètres ont atteint leur valeur de consigne, ($dP$, $dT$, $dX$) = (0,0,0), on est exactement dans la situation du point de fonctionnement, on a donc $d\theta_{inj}$ = 0.

- si les paramètres n'ont pas atteint leur valeur de consigne, $(dP, dT, dX) \neq (0,0,0)$, on introduit une correction angulaire $d\theta_{inj} \neq 0$ pour avoir le même angle de début de combustion $\theta_{soc}$.

On réalise alors une modélisation du système de combustion. Pour ce faire on se base dans un premier temps sur le modèle de « l'intégrale de Knock ». Ce modèle est décrit dans le document suivant :

K. Swan, M.Shahbakhti and C.R. Koch, "Predicting Start of Combustion Using a modified Knock Integral Method for an HCCI Engine", in Proc. Of SAE Conference, 2006.

Selon ce modèle, le début de la combustion ne se fait pas immédiatement après l'injection de fuel. Il y a un délai d'auto inflammation qui se modélise sous la forme de l'intégrale de Knock. Celui-ci permet, à partir des valeurs des paramètres $P$, $T$, $X$ et $\theta_{inj}$, de déterminer l'angle de début de combustion $\theta_{soc}$ :

$$\int_{\theta_{inj}}^{\theta_{soc}} g(P(\theta), T(\theta), X(\theta))\, d\theta = 1$$

Avec :

$P$ : la pression dans la chambre de combustion, fonction de l'angle vilebrequin $\theta$.
$T$ : la température dans la chambre de combustion, fonction de l'angle vilebrequin $\theta$.
$X$ : le rapport entre la masse de gaz brûlés et la masse de gaz totale dans la chambre de combustion (paramètre entre 0 et 1). Il est fonction de l'angle vilebrequin $\theta$.

$$g(P, T, X) = \frac{A}{C_1 + C_2 X} . P^n . \exp\left(\frac{T_A}{T}\right)$$

$A$, $C_1$, $C_2$, $n$ et $T_A$, des paramètres physiques fixes à calibrer.
Puis, on considère qu'avant le début de la combustion, le mélange de gaz est en compression adiabatique. On peut donc ramener facilement la connaissance de $P(\theta)$, $T(\theta)$ à celle de $P_{IVC}$, $T_{IVC}$ et du volume de la chambre $V(\theta)$, celui-ci étant parfaitement connu. De plus, le taux de gaz brûlés n'évolue pas tout au long de la phase de compression sans combustion $X(\theta) = X_{IVC}$. On peut donc ramener l'intégrale de Knock à l'intégrale suivante :

$$\int_{\theta_{inj}}^{\theta_{soc}} f(P_{IVC}, T_{IVC}, X_{IVC}, \theta)\, d\theta = 1$$

Avec $f$ une fonction entièrement connue est définie en annexe.
Enfin, par une linéarisation de l'intégrale de Knock au premier ordre, on exprime la correction $d\theta_{inj}$ à apporter (on fait alors l'hypothèse de petites perturbations suivantes : $d\theta_{inj} \ll \theta_{inj}$, $dP \ll P_{ref}$, $dT \ll T_{ref}$ et $dX \ll X_{ref}$) :

$$d\theta_{inj} = \alpha_P . dP + \alpha_T . dT + \alpha_X . dX$$

Les coefficients de linéarisation $\alpha_P, \alpha_T$ et $\alpha_X$ représentent les influences respectives des trois erreurs $dP$, $dT$ et $dX$ sur la correction à apporter à $\theta_{inj}$ pour conserver le même angle de début de combustion. Leurs expressions sont données en annexe.
Pour calibrer les paramètres du modèle ($A$, $C_1$, $C_2$, $n$ et $T_A$), on réalise des expériences sur banc d'essais moteur. Au cours de ces expériences, on détermine le début de combustion calculé à partir des données de consigne issues de cartographie. Puis on estime le début de combustion à l'aide du modèle choisi. On fait alors varier les paramètres $A$, $C_1$, $C_2$, $n$ et $T_A$ de façon à obtenir une bonne corrélation entre le début de combustion calculé sur les données de consigne et celle estimée par le modèle.
Un exemple de jeu de paramètre issu d'une telle calibration est donné dans le tableau suivant :

| Paramètre | A | $C_1$ | $C_2$ | n | $T_A$ |
|---|---|---|---|---|---|
| Unité | $(hPa)^{-n}\ s^{-1}$ | 1 | 1 | 1 | °K |
| Valeur | 0.22 | 1 | 10.5 | 1.13 | 1732 |

La figure 2 illustre un schéma du calcul de la correction $d\theta_{inj}$ de l'angle d'injection du carburant. Après avoir estimé (*EST-ACT*) les valeurs réelles de $P_{IVC}$, $T_{IVC}$ et $X_{IVC}$, déterminé (*DET-CONS*) les valeurs de consignes $P^{ref}$, $T^{ref}$, $X^{ref}$ et $\theta_{inj}^{ref}$, on calcule les différences (*CAL-DIF*) $dP$, $dT$ et $dX$. Ensuite, on calcule les coefficients de linéarisation (*CAL-COEF*) $\alpha_P, \alpha_T$ et $\alpha_X$. Enfin, en accord avec le modèle de combustion choisie (intégrale de Knock sous hypothèses), on calcule la correction *(CAL-COR)* $d\theta_{inj}$ :

$$d\theta_{inj} = \alpha_P.dP + \alpha_T.dT + \alpha_X.dX$$

4- Adaptation de la boucle de fuel (boucle rapide).

Le système de contrôle moteur pilote le système d'injection du carburant dans la chambre de combustion lorsque l'angle vilebrequin est égal à la valeur corrigée de consigne $\theta_{inj}^{ref}$ afin de conserver la combustion optimale.

En appliquant la correction précédente sur l'angle d'injection, on peut alors assurer que l'angle de début de la combustion reste constant. Petit à petit, la boucle d'air amène les erreurs $dP$, $dT$ et $dX$ vers zéro, la correction va donc disparaître dans les phases statiques stabilisées.

Un intérêt du procédé est de relier directement les erreurs de la boucle d'air avec la correction à appliquer sur la commande de fuel via des coefficients ($\alpha_P$, $\alpha_T$, $\alpha_X$) qui sont entièrement calculables car tout est parfaitement connu (fonction $f$, valeurs de consigne $P_{ref}, T_{ref}, X_{ref}$).

Le procédé selon l'invention peut être utilisé dans des véhicules diesel. Ainsi, un autre objet de l'invention concerne un moteur diesel apte à appliquer le procédé. Ce moteur diesel comprend au moins une chambre de combustion, un système d'injection de carburant dans la chambre de combustion, au moins une conduite d'admission pour l'admission dans la chambre de combustion d'un comburant gazeux, un système de contrôle moteur apte à piloter des actionneurs. Le moteur comporte également des moyens pour déterminer des valeurs de consigne ($P^{ref}, T^{ref}, X^{ref}$) à appliquer à des paramètres physiques liés à l'admission du comburant gazeux dans la chambre de combustion et une valeur de consigne $\theta_{inj}^{ref}$ d'un angle vilebrequin auquel un carburant doit être injecté dans la chambre de combustion.

Enfin, selon l'invention, ce moteur comporte des moyens, tels qu'un calculateur pour corriger la valeur de consigne $\theta_{inj}^{ref}$ avant que les paramètres physiques n'atteignent leurs valeurs de consigne, en tenant compte d'une différence entre des valeurs réelles des paramètres physiques et les valeurs de consignes de ces paramètres physiques ($P^{ref}$, $T^{ref}$, $X^{ref}$). Le moteur comporte également un système de contrôle moteur apte à piloter le système d'injection de façon à injecter du carburant dans la chambre de combustion lorsque l'angle vilebrequin est égal à la valeur corrigée de consigne $\theta_{inj}^{ref}$ afin de conserver la combustion optimale.

**ANNEXE**

**Expression de la fonction *f***

La fonction *f* intervient dans l'intégrale de Knock, lorsque l'on fait les hypothèses suivantes :

- avant le début de la combustion, le mélange de gaz est parfait et en compression adiabatique :

$$P(\theta).V(\theta)^\gamma = cste \quad \Rightarrow \quad P(\theta) = P_{IVC}.\nu^\gamma(\theta)$$

$$T(\theta).V(\theta)^{\gamma-1} = cste \quad \Rightarrow \quad T(\theta) = T_{IVC}.v^{\gamma-1}(\theta)$$

Avec:

$$v(\theta) = \frac{V_{IVC}}{V(\theta)} \quad : \text{fonction du volume entièrement connue.}$$

$V_{IVC}$ : le volume de la chambre à la fermeture des soupapes.
$V(\theta)$ : le volume de la chambre en fonction de l'angle du vilebrequin.
$\gamma(X)$ : paramètre de compression adiabatique. Il dépend notamment de la composition chimique $X$.

- le taux de gaz brûlés n'évolue pas tout au long de la phase de compression sans combustion :

$$X(\theta) = X_{IVC}$$

Ainsi, on obtient l'intégrale de Knock suivante :

$$\int_{\theta_{inj}}^{\theta_{soc}} \frac{A}{C_1 + C_2 X_{IVC}} .P_{IVC}{}^{n} .v^{\gamma(X_{IVC}).n}(\theta) \exp\left( -\frac{T_A}{T_{IVC}}.v^{1-\gamma(X_{IVC})}(\theta) \right) d\theta = 1$$

Soit, l'équation générale suivante :

$$\int_{\theta_{inj}}^{\theta_{soc}} f(P_{IVC}, T_{IVC}, X_{IVC}, \theta)\, d\theta = 1$$

avec :

$$f(P_{IVC}, T_{IVC}, X_{IVC}, \theta) = \frac{A}{C_1 + C_2 X_{IVC}} .P_{IVC}{}^{n} .v^{\gamma(X_{IVC}).n}(\theta) \exp\left( -\frac{T_A}{T_{IVC}}.v^{1-\gamma(X_{IVC})}(\theta) \right)$$

**Expression des coefficients de linéarisation** ($\alpha_P, \alpha_T, \alpha_X$)

On a : $d\theta_{inj} = \alpha_P.dP + \alpha_T.dT + \alpha_X.dX$
Les paramètres $\alpha_P, \alpha_T$ et $\alpha_X$ représentent les influences respectives des trois erreurs $dP$, $dT$ et $dX$ sur la correction à apporter à $\theta_{inj}$ pour conserver le même angle de début de combustion. Leurs expressions sont les suivantes :

$$\alpha_P = -\frac{\left( \int_{\theta_{inj}^{ref}}^{\theta_{soc}} \frac{\partial f}{\partial P}(P^{ref}, T^{ref}, X^{ref}, \theta)\, d\theta \right)}{f(P^{ref}, T^{ref}, X^{ref}, \theta_{inj}^{ref})} = -\frac{n}{P_{ref}} . \frac{1}{f(P^{ref}, T^{ref}, X^{ref}, \theta_{inj}^{ref})}$$

$$\alpha_T = -\frac{\left( \int_{\theta_{inj}^{ref}}^{\theta_{soc}} \frac{\partial f}{\partial T}(P^{ref}, T^{ref}, X^{ref}, \theta)\, d\theta \right)}{f(P^{ref}, T^{ref}, X^{ref}, \theta_{inj}^{ref})} = \frac{-\frac{T_A}{T_{IVC}^2}\left( \int_{\theta_{inj}^{ref}}^{\theta_{soc}} f(P^{ref}, T^{ref}, X^{ref}, \theta).v^{1-\gamma}(\theta)\, d\theta \right)}{f(P^{ref}, T^{ref}, X^{ref}, \theta_{inj}^{ref})}$$

$$\alpha_X = \frac{\left( \int_{\theta_{inj}^{ref}}^{\theta_{sec}} \frac{\partial f}{\partial X}(P^{ref}, T^{ref}, X^{ref}, \theta)\, d\theta \right)}{f(P^{ref}, T^{ref}, X^{ref}, \theta_{inj}^{ref})}$$

$$= \frac{\left( \frac{C_2}{C_1 + C_2 X^{ref}} - \left( \int_{\theta_{inj}^{ref}}^{\theta_{sec}} f(P^{ref}, T^{ref}, X^{ref}, \theta).\ln(v(\theta)) \left[ n + \frac{T_A}{T_{IVC}} v^{1-\gamma}(\theta) \right] d\theta \right) \cdot \frac{d\gamma}{dX}(T^{ref}, X^{ref}) \right)}{f(P^{ref}, T^{ref}, X^{ref}, \theta_{inj}^{ref})}$$

## Revendications

**1.** Procédé de contrôle de combustion d'un moteur diesel, dans lequel : - on détermine des valeurs de consigne de paramètres physiques liés à l'admission de comburant gazeux dans une chambre de combustion, ainsi qu'une valeur de consigne $\theta_{inj}^{ref}$ d'un angle vilebrequin auquel un carburant doit être injecté dans la chambre de combustion, lesdites valeurs de consigne étant déterminées de façon à optimiser la combustion, - un système de contrôle moteur pilote des actionneurs de façon à ce que les valeurs desdits paramètres physiques soient égales auxdites valeurs de consigne, **caractérisé en ce que** le procédé comporte les étapes suivantes :

- on corrige la valeur de consigne $\theta_{inj}^{ref}$ avant que lesdits paramètres physiques n'atteignent leurs valeurs de consigne, en tenant compte des différences entre des valeurs réelles desdits paramètres physiques et lesdites valeurs de consignes de ces paramètres physiques, et
- ledit système de contrôle moteur pilote une injection de carburant dans la chambre de combustion lorsque l'angle vilebrequin est égal à ladite valeur corrigée de consigne $\theta_{inj}^{ref}$ afin de conserver la combustion optimale.

**2.** Procédé de contrôle selon la revendication 1, dans lequel on détermine ladite correction $d\theta_{inj}$ en appliquant les étapes suivantes :

- on estime lesdites valeurs réelles desdits paramètres physiques ;
- on calcule lesdites différences $dP$, $dT$ et $dX$ entre lesdites valeurs réelles et lesdites valeurs de consignes ;
- on calcule des coefficients de linéarisation $\alpha_P, \alpha_T$ et $\alpha_X$ définis par une linéarisation de l'intégrale de Knock au premier ordre ;
- on calcule la correction $d\theta_{inj}$ en appliquant la formule suivante :

$$d\theta_{inj} = \alpha_P.dP + \alpha_T.dT + \alpha_X.dX$$

**3.** Procédé de contrôle selon l'une des revendications précédentes, dans lequel lesdits paramètres physiques sont choisis parmi au moins les paramètres suivants au moment de la fermeture soupape : pression dans la chambre de combustion ($P_{IVC}$), température dans la chambre de combustion ($T_{IVC}$), et rapport ($X_{IVC}$) entre une masse de gaz brûlés et une masse de gaz totale dans la chambre de combustion.

**4.** Procédé de contrôle selon l'une des revendications précédentes, dans lequel on détermine les valeurs de consignes à l'aide d'une cartographie de consigne établie sur banc moteur.

**5.** Moteur diesel comprenant au moins une chambre de combustion, un système d'injection de carburant dans ladite chambre de combustion, au moins une conduite d'admission pour l'admission dans la chambre de combustion d'un comburant gazeux, un système de contrôle moteur apte à piloter des actionneurs, des moyens pour déterminer des valeurs de consigne ($P^{ref}, T^{ref}, X^{ref}$) à appliquer à des paramètres physiques liés à l'admission du comburant gazeux dans la chambre de combustion et une valeur de consigne $\theta_{inj}^{ref}$ d'un angle vilebrequin auquel un carburant doit être injecté dans la chambre de combustion, **caractérisé en ce qu'**il comporte des moyens pour corriger la valeur

de consigne $\theta_{inj}^{ref}$ avant que lesdits paramètres physiques n'atteignent leurs valeurs de consigne, en tenant compte d'une différence entre des valeurs réelles desdits paramètres physiques et lesdites valeurs de consignes de ces paramètres physiques ($P^{ref}, T^{ref}, X^{ref}$), et **en ce que** ledit système de contrôle moteur est apte à piloter ledit système d'injection de façon à injecter du carburant dans la chambre de combustion lorsque l'angle vilebrequin est égal à ladite valeur corrigée de consigne $\theta_{inj}^{ref}$ afin de conserver la combustion optimale.

**Claims**

1. A method for controlling the combustion of a diesel engine, comprising:

   - determining setpoint values for physical parameters linked with the intake of gaseous oxidizer In a combustion chamber, and a setpoint value $\theta_{inj}^{ref}$ for a crank angle at which a fuel has to be injected into the combustion chamber, said setpoint values being determined so as to optimize combustion, - an engine control system that controls actuators In such a way that the values of said physical parameters are equal to said setpoint values, **characterized in that** the method comprises the following stages:

   - correcting setpoint value $\theta_{inj}^{ref}$ before said physical parameters reach their setpoint values, by taking account of the differences between real values of said physical parameters and said setpoint values of these physical parameters and
   - said engine control system controls a fuel injection Into the combustion chamber when the crank angle is equal to said corrected setpoint value $\theta_{inj}^{ref}$ In order to keep combustion optimal

2. A control method as claimed in claim 1, wherein said correction $d\theta_{inj}$ Is determined by applying the following stages:

   - estimatIng said real values of said physical parameters,
   - calculating said differences $dP$, $dT$ and $dX$ between said real values and said setpoint values.
   - calculating linearization coefficients $\alpha_P, \alpha_T, \alpha_X$ defined by linearization of the Knock integral to the first order, and
   - calculating correction $d\theta_{inj}$ by applying the following formula:

$$d\theta_{inj} = \alpha_P.dP + \alpha_T.dT + \alpha_X.dX \,.$$

3. A control method as claimed in any one of the previous claims, wherein said physical parameters are selected from among at least the following parameters upon valve closing: pressure In the combustion chamber ($P_{IVC}$), temperature in the combustion chamber ($P_{IVC}$), ratio ($X_{IVC}$) between a burnt gas mass and a total gas mass in the combustion chamber.

4. A control method as claimed in any one of the previous claims, wherein the setpoint values are determined by means of a setpoint map established on the engine test bench.

5. A diesel engine comprising at least one combustion chamber, a system for injecting fuel into said combustion chamber, at least one intake pipe for intake into the combustion chamber of a gaseous oxidizer, an engine control system capable of controlling actuators, means for determining setpoint values ($P^{ref}, T^{ref}, X^{ref}$) to be applied to physical parameters linked with the intake of the gaseous oxidizer In the combustion chamber and a setpoint value $\theta_{inj}^{ref}$ of a crank angle at which a fuel has to be injected into the combustion chamber, **characterized in that** it comprises means for correcting setpoint value $\theta_{inj}^{ref}$ before said physical parameters reach their setpoint values, by taking account of a difference between real values of said physical parameters and said setpoint values of these physical parameters ($P^{ref}, T^{ref}, X^{ref}$), and said engine control system is capable of controlling said injection system so as to inject fuel into the combustion chamber when the crank angle is equal to said corrected setpoint value $\theta_{inj}^{ref}$ in order to keep combustion optimal.

**Patentansprüche**

1. Verfahren zur Steuerung der Verbrennung eines Dieselmotors, wobei: - Sollwerte von physikalischen Parametern, die mit dem Einlass von gasförmigem Oxidationsmittel in einen Brennraum zusammenhängen, sowie ein Sollwert $\theta_{inj}^{ref}$ eines Kurbelwellenwinkels, bei dem ein Kraftstoff in den Brennraum eingespritzt werden muss, bestimmt werden, wobei diese Sollwerte derart bestimmt werden, dass die Verbrennung optimiert wird; - ein Motorsteuerungssystem Aktuatoren derart vorsteuert, dass die Werte der physikalischen Parameter gleich den Sollwerten sind, **dadurch gekennzeichnet, dass** das Verfahren die folgenden Schritte aufweist:

   - es wird der Sollwert $\theta_{inj}^{ref}$, bevor die physikalischen Parameter ihre Sollwerte erreichen, unter Berücksichtigung der Differenzen zwischen Istwerten der physikalischen Parameter und den Sollwerten dieser physikalischen Parameter korrigiert, und
   - das Motorsteuerungssystem steuert eine Einspritzung von Kraftstoff in den Brennraum vor, wenn der Kurbelwellenwinkel gleich dem korrigierten Sollwert $\theta_{inj}^{ref}$ ist, um die optimale Verbrennung beizubehalten.

2. Steuerungsverfahren nach Anspruch 1, wobei die Korrektur $d\theta_{inj}$ unter Anwendung der folgenden Schritte bestimmt wird:

   - es werden die Istwerte der physikalischen Parameter geschätzt;
   - es werden die Differenzen $dP$, $dT$ und $dX$ zwischen den Istwerten und den Sollwerten berechnet;
   - es werden die Linearisierungskoeffizienten $\alpha_P$, $\alpha_T$ und $\alpha_X$ berechnet, die durch eine Linearisierung des Klopf-Integrals (Knock Integral) erster Ordnung definiert sind;
   - es wird die Korrektur $d\theta_{inj}$ unter Anwendung der folgenden Formel berechnet:

$$d\theta_{inj} = \alpha_P.dP + \alpha_T.dT + \alpha_X.dX$$

3. Steuerungsverfahren nach einem der vorhergehenden Ansprüche, wobei die physikalischen Parameter aus wenigstens den folgenden Parametern zum Zeitpunkt des Schließens des Ventils ausgewählt sind: Druck im Brennraum ($P_{IVC}$), Temperatur im Brennraum ($P_{IVC}$) und Verhältnis ($X_{IVC}$) zwischen einer Masse verbrannter Gase und einer Gesamtgasmasse im Brennraum.

4. Steuerungsverfahren nach einem der vorhergehenden Ansprüche, wobei die Sollwerte mit Hilfe eines Sollwertkennfelds bestimmt werden, das auf dem Motorprüfstand erstellt wird,

5. Dieselmotor, welcher mindestens einen Brennraum, ein System zur Einspritzung von Kraftstoff in den Brennraum, mindestens eine Einlassleitung zum Einlassen eines gasförmigen Oxidationsmittels in den Brennraum, ein Motorsteuerungssystem, das geeignet ist, Aktuatoren vorzusteuern, und Mittel zum Bestimmen von Sollwerten ($P^{ref}$, $T^{ref}$, $X^{ref}$), die auf physikalische Parameter anzuwenden sind, die mit dem Einlass des gasförmigem Oxidationsmittels in den Brennraum zusammenhängen, und eines Sollwertes $\theta_{inj}^{ref}$ eines Kurbelwellenwinkels, bei dem ein Kraftstoff in den Brennraum eingespritzt werden muss, umfasst, **dadurch gekennzeichnet, dass** er Mittel zum Korrigieren des Sollwertes $\theta_{inj}^{ref}$, bevor die physikalischen Parameter ihre Sollwerte erreichen, unter Berücksichtigung einer Differenz zwischen Istwerten der physikalischen Parameter und den Sollwerten dieser physikalischen Parameter ($P^{ref}$, $T^{ref}$, $X^{ref}$) aufweist, und dadurch, dass das Motorsteuerungssystem geeignet ist, das Einspritzsystem derart vorzusteuern, dass es Kraftstoff in den Brennraum einspritzt, wenn der Kurbelwellenwinkel gleich dem korrigierten Sollwert $\theta_{inj}^{ref}$ ist, um die optimale Verbrennung beizubehalten.

**Fig. 1**

**Fig. 2**

## RÉFÉRENCES CITÉES DANS LA DESCRIPTION

**Littérature non-brevet citée dans la description**

- **J. BENGTSSON ; P. STRANDH ; R. JOHANSSON ; P. TUNESTAL ; B. JOHANSSON.** Control of Homogeneous Charge Compression Ignition (HCCI) Engine Dynamics. *Proceeding of the 2004 American Control Conference, Boston,* 30 Juin 2004

- **K. SWAN ; M.SHAHBAKHTI ; C.R. KOCH.** Predicting Start of Combustion Using a modified Knock Integral Method for an HCCI Engine. *Proc. Of SAE Conference,* 2006